# EUROPÄISCHE PATENTSCHRIFT

(11) **EP 2 516 892 B1**
(45) Veröffentlichungstag und Bekanntmachung des Hinweises auf die Patenterteilung: **30.07.2014**
(21) Anmeldenummer: 10795991.8
(22) Anmeldetag: 10.12.2010
(51) Int. Cl.: B64C 13/28, B64C 13/50, G01M 9/08

(54) **VORRICHTUNG ZUM VERSTELLEN UND ARRETIEREN EINER BEWEGBAREN STEUERFLÄCHE**
DEVICE FOR ADJUSTING AND LOCKING A MOVABLE CONTROL SURFACE
DISPOSITIF POUR LE RÉGLAGE ET L'ARRÊT D'UNE SURFACE DE COMMANDE MOBILE

(30) Priorität: 22.12.2009 DE 102009059950; 22.12.2009 US 289250 P
(43) Veröffentlichungstag der Anmeldung: 31.10.2012
(73) Patentinhaber: Airbus Operations GmbH, 21129 Hamburg (DE)
(72) Erfinder: AKKERMANN, Eldert, 28259 Bremen (DE)
(74) Vertreter: Maiwald Patentanwalts GmbH
(86) Internationale Anmeldenummer: PCT/EP2010/069351
(87) Internationale Veröffentlichungsnummer: WO 2011/076588

(56) Entgegenhaltungen:
- DE-A1-102005 040 441
- anonymous: "The Bug", Webauftritt Ultramotion , 1. Juli 2007 (2007-07-01), XP002623668, Gefunden im Internet: URL:http://web.archive.org/web/20070107201 027/http://ultramotion.com/products/bugApp .html [gefunden am 2011-02-18]
- JENSEN S C ET AL: "Flight test experience with an electromechanical actuator on the F-18 systems research aircraft", DIGITAL AVIONICS SYSTEMS CONFERENCES, 2000. PROCEEDINGS. DASC. THE 19T H 7-13 OCTOBER 2000, PISCATAWAY, NJ, USA,IEEE, Bd. 1, 7. Oktober 2000 (2000-10-07), Seiten 2.E.3_1-2.E.3_10, XP010525336, ISBN: 978-0-7803-6395-3

## Beschreibung

### TECHNISCHES GEBIET

Die Erfindung betrifft eine Steuerflächeneinheit für ein Windkanal-Flugzeugmodell mit einer bewegbaren Steuerfläche und einer Vorrichtung zum Verstellen und Arretieren einer bewegbaren Steuerfläche.

### HINTERGRUND DER ERFINDUNG

Ein Aspekt der vorliegenden Erfindung betrifft eine vorteilhafte Ausgestaltung von Windkanal-Fluggerätemodellen. In einem Windkanal werden zum Bestimmen von aerodynamischen Parametern Fluggerätemodelle eingesetzt, die sehr vorbildgetreu ausgeführt sind und - je nach Art und Zweck der Messung - in Messversuchen auch ausgeschlagene Steuerflächen aufweisen können. Üblicherweise werden hierfür Steuerflächen mit fest eingestellten Ausschlagwinkeln eingesetzt, die nach jeder Messung ausgetauscht werden müssen. Hierzu ist erforderlich, in den Windkanal einzutreten, an dem Fluggerätemodell die Steuerflächen manuell auszutauschen und danach eine nächste Messung durchzuführen. Aufgrund beträchtlicher Kosten des Windkanalbetriebs ist dies bei ausgedehnten Messkampagnen mit vielen verschiedenen Steuerflächenwinkeln keine besonders vorteilhafte Lösung.

Es ist ferner bekannt, teilweise Verstellvorrichtungen zum Bewegen von Steuerflächen einzusetzen, die außerhalb des Fluggerätemodells angeordnet sind und über Gestänge ferngesteuert Steuerflächen bewegen können. Dies ist aufgrund der möglichen Beeinflussung der Strömung nicht besonders vorteilhaft.

In DE 10 2008 003 543 A1 und in US 2009 0179109 A1 wird ein System und Verfahren zum Verstellen und Arretieren eine an einem Windkanal-Fluggerätemodell bewegbaren angeordneten Steuerfläche offenbart, wobei das System eine Antriebsanordnung zum Antreiben der Steuerfläche und eine Arretieranordnung aufweist. Die Steuerfläche ist über ein Pneuel bewegbar und kann mittels einer verzahnten Arretieranordnung in einer vorgegebenen, abgestuften Position arretiert werden.

DE 10 2005 040 441 A1 zeigt ein Linearstellorgan, insbesondere zur Fernbetätigung von verstellbaren Komponenten an Windkanalmodellen, mit einem Gehäuse, einem Getriebemotor und einer Gewindespindel, wobei die Gewindespindel mit dem Getriebemotor über einen Kettentrieb verbunden ist.

DE 102 08 258 A1 zeigt eine Vorrichtung zur Bereitstellung eines veränderlichen Strömungsprofils, insbesondere bei einem in einer kryogenen Umgebung angeordneten Strömungskörper, mit einem Linearaktuator und zwei miteinander gekoppelte Kurbeln.

DE 696 24 060 T2 zeigt einen elektrischen Stellantrieb mit einem eine Vielzahl von länglichen und in axialer Richtung verlaufenden Keilen aufweisenden Stellgliedgehäuse.

### ZUSAMMENFASSUNG DER ERFINDUNG

Eine Aufgabe der Erfindung könnte demnach darin liegen, eine Vorrichtung zum Verstellen einer Steuerfläche vorzuschlagen, die einen möglichst kompakten Aufbau zur Integration in ein Fluggeräte-Modell erlaubt, gleichzeitig eine präzise, wiederholbare und auch bei Beaufschlagen mit einer aerodynamischen Strömung gleichbleibende Auslenkung von Steuerflächen in einer nicht gestuften Weise ermöglicht.

Die Aufgabe wird durch eine Steuerflächeneinheit mit den Merkmalen des unabhängigen Anspruchs 1 gelöst. Vorteilhafte Weiterbildungen sind den Unteransprüchen zu entnehmen.

Eine erfindungsgemäße Steuerflächeneinheit für ein Windkanal-Flugzeugmodell mit einer bewegbaren Steuerfläche und einer Vorrichtung zum Verstellen und Arretieren der bewegbaren Steuerfläche weist gemäß einem ersten Aspekt mindestens eine drehbar gelagerte Spindel, mindestens einen Verstellkörper, mindestens eine Linearführung, mindestens eine Antriebseinheit, mindestens einen Linear-Wegmessgeber und mindestens eine Steuereinheit auf, wobei der Verstellkörper mittels der Linearführung entlang einer ersten Bewegungsachse verschiebbar geführt ist, die Spindel mit dem Verstellkörper zum Bewegen des Verstellkörpers entlang der Bewegungsachse verbunden ist, der Verstellkörper dazu eingerichtet ist, mit einem Beschlag einer Steuerfläche verbunden zu werden und der Linear-Wegmessgeber und die Antriebseinheit mit der Steuereinheit verbunden sind und die Steuereinheit dazu eingerichtet ist, eine vorgegebene Stellposition des Verstellkörpers durch Drehen der Spindel mittels der Antriebseinheit und Vergleichen einer durch den Linear-Wegmessgeber detektierten aktuellen Position des Verstellkörpers mit der vorgegebenen Stellposition einzustellen.

Die Kombination aus drehbar gelagerter Spindel, dem Verstellkörper und der Linearführung erlaubt eine stufenlose lineare Bewegung, wie dies von mechanischen Linearaktuatoren üblich ist. Durch die zusätzliche Steuereinheit, die über eine Signal- oder Datenverbindung einen Wert für eine vorgegebene Stellposition erhalten kann, kann mittels einer Antriebseinheit die Spindel gedreht werden, so dass der Verstellkörper in der Linearführung linear bewegt wird. Sobald die Steuereinheit über den Linear-Wegmessgeber die mit der vorgegebenen Stellposition korrelierende Ist-Position feststellt, wird die Antriebseinheit angehalten, so dass die Steuerfläche in beispielsweise einer vorgegebenen Winkelposition verbleibt.

Die Steuereinheit könnte zum Erreichen einer sehr präzisen Stellposition, deren Genauigkeit im Wesentlichen von der Genauigkeit des Linear-Wegmessgebers und des Spiels im Antriebsstrang abhängt, unterschiedliche Verstellgeschwindigkeiten der Antriebseinheit über eine geeignete Ansteuerung der Antriebseinheit erreichen. Kurz vor Erreichen der vorgegebenen Stellposition könnte die Verstellgeschwindigkeit deutlich reduziert werden, so dass die Massenträgheit der Antriebseinheit und des Verstellkörpers sowie der angetriebenen Steuerfläche und beim Antriebsstrang existierenden Komponenten reduziert werden und die vorgegebene Stellposition mit geringer Geschwindigkeit endgültig angefahren wird. So könnte ein Nachregeln durch Zurückdrehen der Antriebseinheit erspart bleiben.

Im einfachsten Fall kann die Antriebseinheit ein Motor sein, der etwa als bürstenloser Elektromotor ausgeführt sein könnte. Abhängig von der Größe und Bauart des Elektromotors könnte es sich zur Verringerung der Drehzahl und zur Erhöhung des Drehmoments anbieten, ein Getriebe zwischen den Motor und der Spindel anzuordnen. Zum Erreichen einer möglichst kompakten Baueinheit bietet es sich an, das Getriebe als Planetengetriebe auszuführen, welches zur Längsachse des Elektromotors punktsymmetrisch aufgebaut sein könnte und idealerweise direkt mit dem Motor in einem Gehäuse untergebracht ist. Dies erlaubt eine platzsparende Ausgestaltung der erfindungsgemäßen Vorrichtung.

Gemäß einer vorteilhaften Ausführungsform ist die Spindel selbsthemmend und spielfrei ausgerührt. Dadurch könnte eine Hysterese-Erscheinung vermeidbar sein, die sich in einer ungenauen Positionierung äußert. Durch die selbsthemmende Auslegung der Spindel kann auch bei Belastung der Steuerfläche während aerodynamischer Versuche die eingestellte Position der Steuerfläche erhalten bleiben, denn die mechanische Kopplung der Steuerfläche mit der Spindel erlaubt bei Krafteinwirkung auf die Spindel keine Drehung der Spindel. In diesem Zusammenhang sei an dieser Stelle erwähnt, dass selbstverständlich auch die Verbindung zwischen einem anzutreibenden Ruderbeschlag und dem Verstellkörper spielfrei ausgelegt sein sollte, so dass eine ungenaue Positionierung vollkommen vermieden werden kann.

Gemäß einer vörteilhaften Ausführungsform weist der Verstellkörper eine Spindelmutter mit einem Spindelmuttergewinde auf, das mit einem Spindelgewinde der Spindel korrespondiert und eine Ausnehmung aufweist, die dazu geeignet ist, die Spindelmutter durch Einschieben formschlüssig und verdrehsicher aufzunehmen. Der Verstellkörper kann dadurch getrennt von der Spindelmutter hergestellt werden und bei Bedarf könnten Spindel und Spindelmutter sehr leicht ausgetauscht werden, ohne Modifikationen an der gesamten Vorrichtung durchzuführen zu müssen.

Gemäß einer vorteilhaften Ausführungsform weist der Verstellkörper Verbindungsmittel zum Verbinden mit einem Verstellhebel auf. Die Verwendung eines Verbindungsmittels an dem Verstellkörper erlaubt die direkte Kopplung mit einem Ruderbeschlag. Der Verstellhebel kann sehr schlank ausgeführt werden, so dass sich die erfindungsgemäße Vorrichtung leichter in das Fluggerätmodell integrieren lässt. Das Verbindungsmittel könnte beispielsweise eine passend geformte Ausnehmung oder ein Ausschnitt an einer Begrenzungskante zum Aufnehmen des Verstellhebels sein, gleichzeitig auch ein Winkelbeschlag oder dergleichen, wobei sämtliche Verbindungsmittel bevorzugt eine Scharnierlinie definieren, um die sich der Verstellhebel verschwenken lässt. Diese Scharnierlinie ist bevorzugt senkrecht zur Bewegungsachse des Verstellkörpers ausgerichtet.

Gemäß einer vorteilhaften Ausführungsform der erfindungsgemäßen Vorrichtung ist die Linearführung als Körper mit einer bewegungsachsensymmetrischen Ausnehmung zum Führen des Verstellkörpers realisiert. Durch Ausformen eines Körpers mit einer derartigen Ausnehmung kann sowohl eine beliebig schlanke Ausführung der erfindungsgemäßen Vorrichtung erreicht werden, gleichzeitig auch ein sehr einfacher Aufbau. Der Verstellkörper und die Ausnehmung lassen sich mit einer entsprechenden Gleitpassung ausstatten, die eine möglichst spielfreie Bewegung des Verstellkörpers ermöglicht.

Gemäß einer vorteilhaften Ausführungsform ist der Verstellkörper mit einer Endabschaltevorrichtung gekoppelt, die mit der Steuereinheit verbundenen ist. Die Endabschaltevorrichtung ist dazu eingerichtet, bei Detektieren einer Extremposition des Verstellkörpers eine zu einer Überschreitung der betreffenden Extremposition führende Verstellbewegungsrichtung durch Unterbinden der betreffenden Verstellbewegungsrichtung zu vermeiden. Eine Überlastung sowohl der Antriebseinheit als auch des Verstellhebels kann durch Vermeiden von harten, mechanischen Anschlägen verhindert werden. Das Verhindern einer Fortbewegung in eine kritische Richtung bezüglich einer erreichten Extremposition erlaubt dennoch das Zurückfahren in eine von der gesperrten Bewegungsrichtung entgegengesetzte Position. Die Steuereinheit würde bevorzugt derart eingerichtet sein, dass nach Verlassen der Extremposition auch wieder beide Bewegungsrichtungen zur Verfügung stehen.

Gemäß einer vorteilhaften Ausführungsform weist die erfindungsgemäße Vorrichtung zwei Endabschaltevorrichtungen auf, die als zwei voneinander beabstandete Lichtschranken ausgeführt sind. Eine Verbindungslinie zwischen den beiden Lichtschranken verläuft parallel zur Bewegungsachse. Der Verstellkörper ist mit einem Unterbrecherprofil gekoppelt, das beim Bewegen des Verstellkörpers durch die beiden Lichtschranken führbar ist. Die Verwendung von Lichtschranken und eines in die Lichtschranken bewegbares Unterbrecherprofil vermeidet die Verwendung von Mikroschaltern oder anderen mechanischen Baueinheiten, die bei häufiger Benutzung oder bei längerer Nichtbenutzung in ihrer Funktion beeinträchtigt werden könnten. Die Lichtschranken sind verschleißfrei und stellen damit eine sehr günstige und zuverlässige Möglichkeit für eine Endabschaltung bereit.

Die Steuerflächeneinheit bildet eine kompakte Einheit, die für sich gesehen, lediglich eine elektrische Verbindung und eine Datenverbindung mit beispielsweise einem Steuerpult, einem Terminal oder dergleichen verbunden werden muss, um bei Bedarf den Steuerflächenwinkel einzustellen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination dem Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
Figur 1 zeigt eine isometrische Ansicht der erfindungsgemäßen Vorrichtung mit einer daran angeordneten Steuerfläche.
Figur 2 zeigt eine seitliche Schnittansicht der erfindungsgemäßen Vorrichtung mit einer daran angeordneten Steuerfläche.
Figur 3 zeigt eine Explosionsansicht der erfindungsgemäßen Vorrichtung.
Figur 4 zeigt eine in ein Fluggerätemodell integrierte erfindungsgemäße Vorrichtung.

### DETAILLIERTE DARSTELLUNG EXEMPLARISCHER

### AUSFÜHRUNGSFORMEN

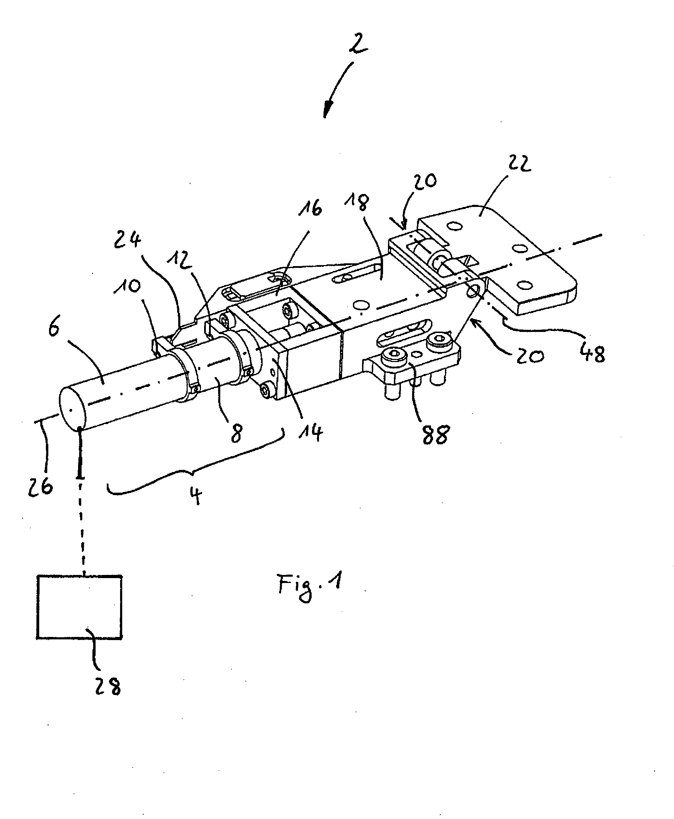

Figur 1 zeigt in einer isometrischen Ansicht die erfindungsgemäße Vorrichtung 2, die eine Antriebseinheit 4 mit einem Elektromotor 6, einem Getriebe 8 und zwei daran angeordneter Endabschaltevorrichtungen 10 und 12 aufweist. Der Elektromotor 6 ist an einem einen gleichen Außendurchmesser aufweisenden Getriebe 8 angeordnet, das wiederum an einem Deckel 14 eines Getriebekastens 16 montiert ist, der sich an eine Linearführung 18 anschließt. Diese weist wiederum zwei Verbindungsmittel 20 auf, die in Form von Winkelbeschlägen ausgeführt sind, die einstückig an der Linearführung 18 ausgebildet sind. Dort wird eine Scharnierlinie 48 mit einem Ruderbeschlag 22 gebildet, an der der Ruderbeschlag 22 schwenkbar angeordnet ist.

In dieser Darstellung ist zumindest ein Teil eines Unterbrecherprofils 24 gezeigt, das sich bei einer Verschwenkbewegung des Beschlags 22 parallel zu einer Bewegungsachse 26 bewegt. Dadurch wird in der Endabschaltevorrichtung 10 in einer Extremposition ein Kontakt oder ein Signal hergestellt, so dass eine Steuereinheit 28 diese Extremposition detektieren und den Antrieb des Motors 6 zumindest in einer Richtung in Zeichnungsebene nach links unterbrechen kann. Bei Erreichen der anderen Extremposition in Zeichnungsebene rechts wird ein Kontakt oder ein Signal mit der anderen Endabschaltevorrichtung 12 hergestellt.

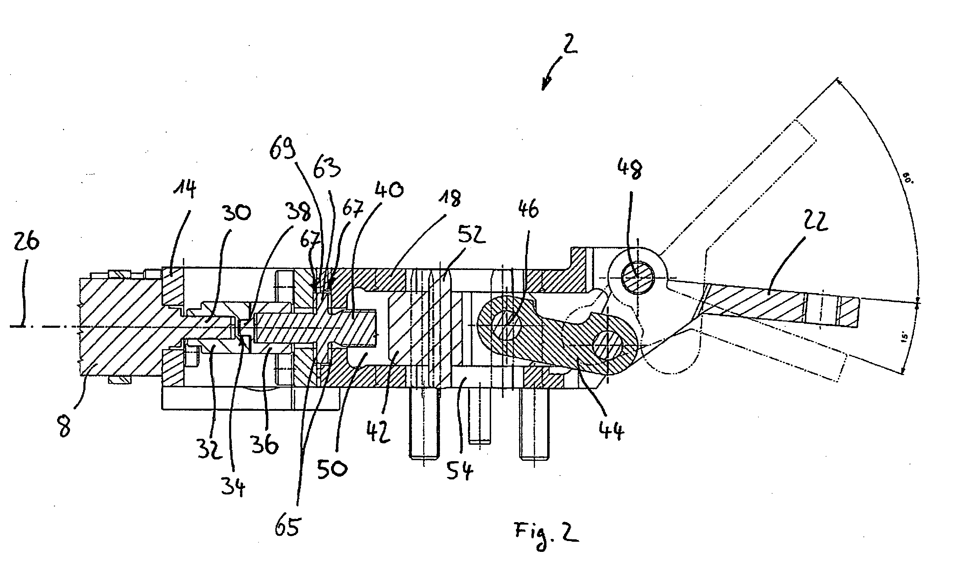

In Figur 2 wird in einer geschnittenen Seitenansicht deutlich, wie die erfindungsgemäße Vorrichtung 2 im Inneren aufgebaut ist. Eine Getriebewelle 30 ragt durch die Platte 14 in den Getriebekasten 16, um dort eine mit der Getriebewelle 30 verbundene Buchse 32 anzutreiben, die an ihrer vom Motor 6 wegweisenden Seite einen Schlitz 34 aufweist. Eine zweite Buchse 36 weist einen korrespondierend geformten Vorsprung 38 auf, der dazu eingerichtet ist, bündig in den Schlitz 34 einzugreifen. Die zweite Buchse 36 ist wiederum mit einer Spindel 40 verbunden, die einen Verstellkörper 42 durch Eingreifen in eine Spindelmutter, die in dieser Darstellung nicht gezeigt ist, bewegt. An dem Verstellkörper 42 ist ein Verstellhebel 44 schwenkbar um eine Scharnierachse 46 angeordnet, der mit seiner vom Verstellkörper 42 weg weisenden Seite schwenkbar mit dem Ruderbeschlag 22 verbunden ist. Der Ruderbeschlag 22 selbst ist, wie in Figur 1 gezeigt, um eine an der Linearführung 18 gebildete Scharnierachse 48 herum schwenkbar angeordnet.

Zum Führen ist der Verstellkörper 42 derart geformt, dass er bündig in einer Ausnehmung 50 der Linearführung 18 bewegt werden kann. Zum Verhindern einer seitlich zu der Bewegungsachse verlaufenden Bewegung könnte exemplarisch ein Stift 52 in den Verstellkörper 42 nach Einbringen in die Ausnehmung 50 eingesetzt werden, der in einem korrespondierenden Schlitz 54 an einer Ober- und einer Unterseite der Linearführung 18 geführt wird. Die Kombination aus Stift 52 und Schlitzen 54 definiert weiterhin auch einen mechanischen Anschlag, der bei defekten oder wirkungslos geschalteten Endabschaltevorrichtungen 10 und 12 eine Weiterbewegung des Ruderbeschlags 22 durch einen harten, mechanischen Anschlag vermeiden würde.

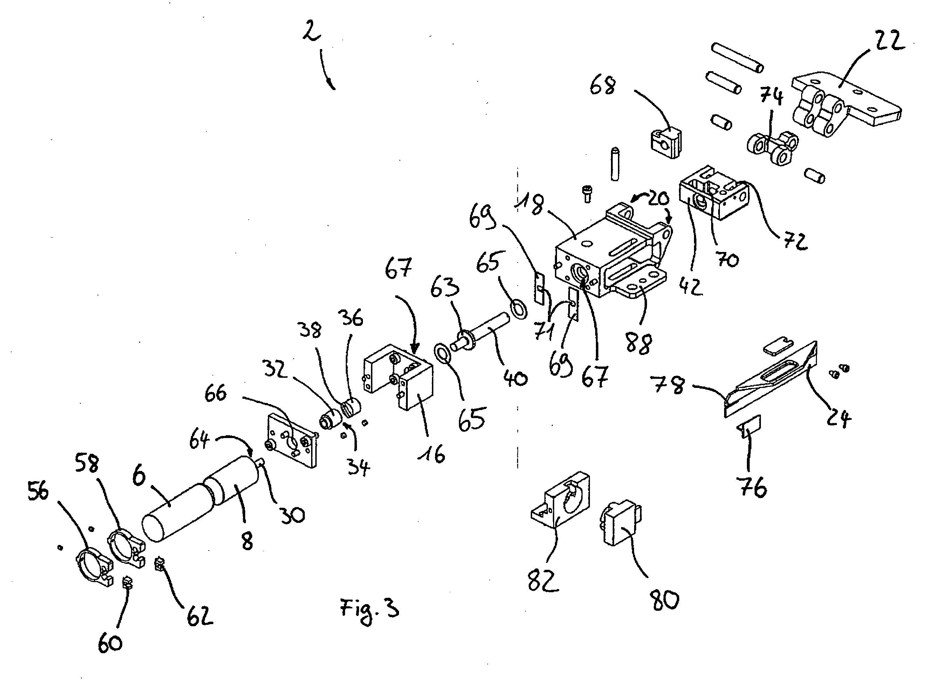

In der Explosionsdarstellung aus Figur 3 werden auf exemplarische Art sämtliche Komponenten der erfindungsgemäßen Vorrichtung 2 im Detail gezeigt. Eine Kombination aus Motor 6 und Getriebe 8 bildet eine funktionale Einheit, an deren äußeren Umfang zwei klemmenartige Halter 56 und 58 angeordnet werden können, die jeweils eine kreisförmige Ausnehmung aufweisen, die mit dem Außendurchmessern des Motors 6 und des Getriebes 8 korrespondieren. An einer exzentrischen Position weisen die beiden Halter 56 und 58 jeweils eine Ausnehmung zum Aufnehmen von Lichtschranken 60 und 62 als Endabschaltevorrichtungen auf, die beispielsweise dort in die Halter 56 und 58 eingeklebt werden können. Die Halter 56 und 58 könnten etwa jeweils mit einer Madenschraube an dem Motor 6 oder Getriebe 8 angeschraubt bzw. verklemmt werden.

Das Getriebe 8 ist an einer Platte 14 zu befestigen, beispielsweise mittels einer Schraubverbindung. Das Getriebe 8 weist in seinem Gehäuse einen ringförmigen Absatz 64 auf, der bündig in kreisförmige Öffnung 66 einbringbar ist und das Getriebe 8 zur Platte 14 zentriert.

Die durch die Öffnung 66 ragende Welle 30 des Getriebes 8 kann mit einer ersten Buchse 32 verbunden werden, beispielsweise durch eine seitlich eingebrachte Madenschraube, die die Buchse 32 kraftschlüssig an der Getriebewelle 32 verklemmt. Eine zweite Buchse 36 mit einem Vorsprung 38 ist in einen in die erste Buchse 32 eingearbeiteten Schlitz 34 bringbar, so dass dadurch eine Übertragung eines Drehmoments erfolgen kann, gleichzeitig aber auch ein gewisser Winkelversatz sowie ein Versatz quer zur Bewegungsachse 26 ausgeglichen werden kann.

Die von der zweiten Buchse 36 angetriebene Spindel 40 ist mit einem Absatz 63 über etwa aus Bronze gefertigte Gleitscheiben 65 drehbar zu der Linearführung 18 gelagert und kann dort mit einer Spindelmutter 68 in Eingriff gebracht werden, die in einer Ausnehmung 70 des Verstellkörpers 42 gebracht werden kann. Zur Aufnahme der Gleitscheiben 65 weisen sowohl die Linearführung 18 als auch der Getriebekasten 16 entsprechend geformte Ausnehmungen 67 bzw. Absätze auf. Das Lagerspiel der Spindel 40 kann durch individuell durch Abschleifen oder andere Abtragsverfahren anpassbare Ausgleichsplatten 69 eingestellt werden, die einen Schlitz 71 aufweisen, durch den sie leicht in eine teilgelöste Verschraubung zwischen der Linearführung 18 und dem Getriebekasten 16 von außen einschiebbar und befestigbar sind. Weiterhin ist besonders vorteilhaft, dass die Spindelmutter 68 in die Ausnehmung 70 einschiebbar gestaltet ist, da hier ein leichter Austausch einer Spindelmutter 68 erreicht werden kann, ohne den Verstellkörper 42 neu fertigen zu müssen.

Zum Erreichen einer besonders spielfreien Längsbewegung des Verstellkörpers 42 könnte sich anbieten, die Spindel 40 als Kugelumlaufspindel auszuführen.

Der Verstellkörper 42 weist an seiner vom Motor 6 und dem Getriebe 8 abgewandten Seite zwei nach außen geöffnete, schlitzförmige Ausnehmungen 72 auf, die symmetrisch zur Bewegungsachse 26 der erfindungsgemäßen Vorrichtung 2 angeordnet sind und dazu eingerichtet sind, einen Hebel 74 aufzunehmen und schwenkbar zu lagern. Der Verstellhebel 74 ist wiederum so ausgestaltet, dass er mit seiner vom Stellkörper 42 abgewandten Seite in einen Ruderbeschlag 22 einbringbar ist, der an einem Winkelbeschlag 20 der Linearführung 18 schwenkbar um eine Scharnierachse 48 gelagert ist. Zum Herstellen einer schwenkbaren Verbindung können Zylinderstiften, Bolzen, Schrauben oder dergleichen eingesetzt werden.

An dem Verstellkörper 42 ist ferner ein Unterbrecherprofil 24 beispielsweise über eine Schraubverbindung angeordnet, so dass sich bei Bewegung des Verstellkörpers 42 auch das Unterbrecherprofil 24 parallel zu der Bewegungsachse 26 der erfindungsgemäßen Vorrichtung 2 bewegt. Ein Unterbrecher 76 könnte in einen nach außen geöffneten Schlitz 78 des Unterbrecherprofils 24 angeordnet werden, so dass eine Unterbrechung der Lichtschranke 60 erfolgen kann. Für die Betätigung der Lichtschranke 62 kann das Unterbrecherprofil 24 eine ähnliche Einrichtung aufweisen, alternativ dazu kann die Betätigung der Lichtschranke 62 invers erfolgen, so dass erst bei Verlassen der Lichtschranke 62 durch das Unterbrecherprofil 24 ein Erreichen einer Extremposition detektiert wird.

Gleichzeitig ist das Unterbrecherprofil 24 dazu eingerichtet, mit Hilfe eines Linear-Wegmessgebers 80, der über einen exemplarisch winkelförmig gestalteten Halter 82 mit der Linearführung 18 verbunden werden kann, den von dem Verstellkörper 42 und damit des Unterbrecherprofils 24 zurückgelegten Weg exemplarisch berührungslos optisch zu erfassen. Das Unterbrecherprofil 24 kann hierfür ein Referenz-Maßband mit einer optisch erfassbaren Teilung aufweisen, das auf der zu dem Linear-Wegmessgeber 80 gewandten Seite des Unterbrecherprofils 24 aufgeklebt sein könnte.

Zur Übertragung der Bewegung des Verstellkörpers 42 an die Steuereinheit 28 kann ein Referenzpunkttransmitter 78 eingesetzt werden, der auf einer Oberseite des Unterbrecherprofils 24 aufgeklebt sein könnte und eine entsprechende Empfangseinheit der Steuereinheit 28 Positionsdaten übersendet.

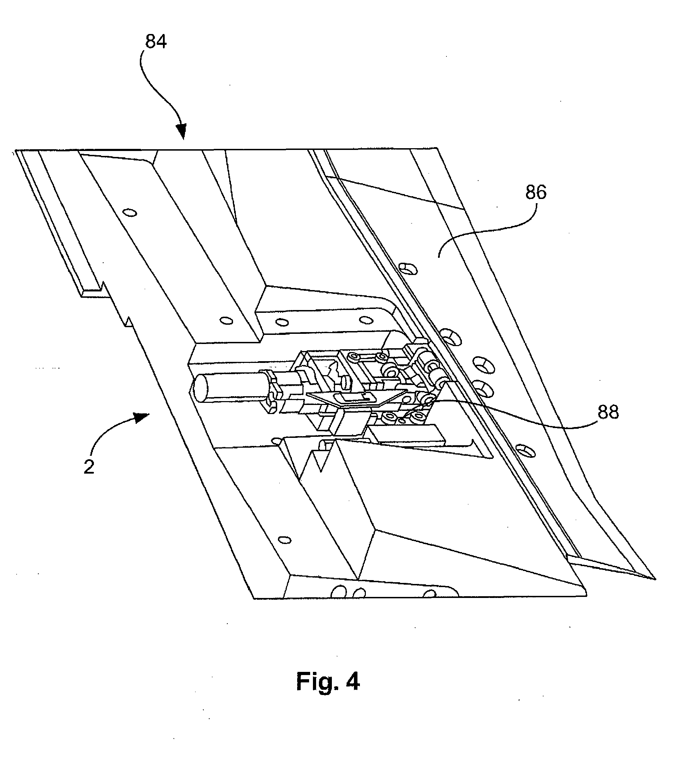

In Fig. 4 wird eine erfindungsgemäße Vorrichtung 2 dargestellt, die in einen Flügel 84 eines Fluggerätemodells integriert und mit einer Steuerfläche 86 verbunden ist. Die Befestigung der erfindungsgemäßen Vorrichtung kann über eine Schraubverbindung mittels Flanschen 88 erfolgen.

Ergänzend sei darauf hinzuweisen, dass "aufweisen" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen und anderer oben beschriebener Ausführungsbeispiele verwendet werden können. Bezugszeichen in den Ansprüchen sind nicht als Einschränkung anzusehen.

### BEZUGSZEICHEN

- 2: erfindungsgemäße Vorrichtung
- 4: Antriebseinheit
- 6: Elektromotor
- 8: Getriebe
- 10: Endabschaltevorrichtung
- 12: Endabschaltevorrichtung
- 14: Deckel
- 16: Getriebekasten
- 18: Linearführung
- 20: Verbindungsmittel
- 22: Ruderbeschlag
- 24: Unterbrecherprofil
- 26: Bewegungsachse
- 28: Steuereinheit
- 30: Getriebewelle
- 32: Buchse
- 34: Schlitz
- 36: Buchse
- 38: Vorsprung
- 40: Spindel
- 42: Verstellkörper
- 44: Verstellhebel
- 46: Scharnierachse
- 48: Scharnierachse
- 50: Ausnehmung
- 52: Stift
- 54: Schlitz
- 56: Halter
- 58: Halter
- 60: Lichtschranke
- 62: Lichtschranke
- 63: Absatz
- 64: Absatz
- 65: Gleitscheibe
- 66: Öffnung
- 67: Ausnehmung
- 68: Spindelmutter
- 69: Ausgleichplatte
- 70: Ausnehmung
- 71: Schlitz
- 72: Ausnehmung
- 74: Hebel
- 76: Unterbrecher
- 78: Schlitz
- 80: Linear-Wegmessgeber
- 82: Halter
- 84: Flügel
- 86: Steuerfläche
- 88: Flansch

## Patentansprüche

1. Steuerflächeneinheit für ein Windkanal-Flugzeugmodell mit einer bewegbaren Steuerfläche (86) und einer Vorrichtung (2) zum Verstellen und Arretieren der bewegbaren Steuerfläche (86), aufweisend
- mindestens eine drehbar gelagerte selbsthemmende Spindel (40);
- mindestens einen mit einem Ruderbeschlag (22) verbundenen Verstellkörper (42);
- mindestens eine Linearführung (18);
- mindestens eine Antriebseinheit (4); und
- eine Steuereinheit;
wobei der Verstellkörper (42) mittels der Linearführung (18) entlang einer ersten Bewegungsachse (26) verschiebbar geführt ist;
wobei die Spindel (40) mit dem Verstellkörper (42) zum Bewegen des Verstellkörpers (42) entlang der Bewegungsachse (26) verbunden ist;
**dadurch gekennzeichnet, dass**
- die Antriebseinheit (4) auf derselben Achse wie die Spindel (40) angeordnet und direkt mit ihr verbunden ist und
- mindestens ein Linear-Wegmessgeber (80) an der Linearführung (18) angeordnet ist,
wobei der Linear-Wegmessgeber (80) und die Antriebseinheit (4) mit der Steuereinheit (28) verbunden sind und die Steuereinheit (28) dazu eingerichtet ist, eine vorgegebene Stellposition des Verstellkörpers (42) durch Drehen der Spindel (40) mittels der Antriebseinheit (4) und Vergleichen einer durch den Linear-Wegmessgeber (80) detektierten aktuellen Position des Verstellkörpers (42) mit der vorgegebenen Stellposition einzustellen.

2. Steuerflächeneinheit nach Anspruch 1, wobei der Verstellkörper (42) eine Spindelmutter (68) mit einem Spindelmuttergewinde aufweist, das mit einem Spindelgewinde der Spindel (40) korrespondiert und eine Ausnehmung (70) aufweist, die dazu geeignet ist, die Spindelmutter (68) durch Einschieben formschlüssig und verdrehsicher aufzunehmen.

3. Steuerflächeneinheit nach Anspruch 1 oder 2, wobei der Verstellkörper (42) Verbindungsmittel (20) zum Verbinden mit einem Verstellhebel (74) aufweist.

4. Steuerflächeneinheit nach einem der vorhergehen Ansprüche, wobei die Linearführung (18) als Körper mit einer bewegungsachsensymmetrischen Ausnehmung (50) zum Führen des Verstellkörpers realisiert ist.

5. Steuerflächeneinheit nach einem der vorhergehenden Ansprüche, wobei der Verstellkörper (42) mit einer mit der Steuereinheit (28) verbundenen Endabschaltevorrichtung (10, 12) gekoppelt ist, die dazu eingerichtet ist, bei Detektieren eines Extremposition des Verstellkörpers (42) eine zu einer Überschreitung der betreffenden Extremposition führende Verstellbewegungsrichtung durch Unterbinden dieser Verstellbewegungsrichtung zu vermeiden.

6. Steuerflächeneinheit nach Anspruch 5, aufweisend zwei Endabschaltevorrichtungen, die als zwei voneinander beabstandete Lichtschranken (60, 62), deren Verbindungslinie parallel zu der Bewegungsachse (26) verläuft und wobei der Verstellkörper (42) mit einem Unterbrecherprofil (24) gekoppelt ist, das beim Bewegen des Verstellkörpers (42) durch die beiden Lichtschranken (60, 62) führbar ist.

7. Steuerflächeneinheit nach Anspruch 6, wobei der Linear-Wegmessgeber (80) dazu eingerichtet ist, die Bewegung des Unterbrecherprofils (24) abzutasten.

## Claims

1. A control surface unit in a wind tunnel aircraft model with an apparatus (2) for adjusting and locking a movable control surface (86), comprising
- at least one rotatably held self-locking spindle (40);
- at least one adjustment body (42) connected to a control surface mount (22);
- at least one linear guide (18);
- at least one drive unit (4); and
- a control unit;
wherein the adjustment body (42) by means of the linear guide (18) is slidably guided along a first movement axis (26);
wherein the spindle (40) is connected to the adjustment body (42) for moving the adjustment body (42) along the movement axis (26);
**characterized in that**
- the drive unit (4) is arranged on the same axis as the spindle (40) and directly connected to it and
- at least one linear positioning encoder (80) is arranged at the linear guide (18),
wherein the linear positioning encoder (80) and the drive unit (4) are connected to the control unit (28), and the control unit (28) is designed to adjust a predetermined actuating position of the adjustment body (42) by rotation of the spindle (40) by means of the drive unit (4) and by comparing an actual position, detected by the linear positioning encoder (80), of the adjustment body (42) with the predetermined actuating position.

2. The apparatus (2) of claim 1, wherein the adjustment body (42) comprises a spindle nut (68) with a spindle nut thread that corresponds to a spindle thread of the spindle (40) and that comprises a recess (70) that is suitable for receiving the spindle nut (68) in a positive-locking and non-rotational manner by sliding in.

3. The apparatus (2) of claim 1 or 2, wherein the adjustment body (42) comprises connecting means (20) for connection to an adjustment lever (74).

4. The apparatus (2) of any one of the preceding claims, wherein the linear guide (18) has been implemented as a body with a movement-axis-symmetrical recess (50) for guiding the adjustment body.

5. The apparatus (2) of any one of the preceding claims, wherein the adjustment body (42) is coupled to a limit switching device (10, 12) that is connected to the control unit (28), which limit switching device (10, 12) is designed, when an extreme position of the adjustment body (42) is detected, to avoid an adjustment movement direction that would result in exceeding the corresponding extreme position by preventing movement in that adjustment movement direction.

6. The apparatus (2) of claim 6, comprising two limit switching devices that are designed as two photoelectric barriers (60, 62) that are spaced apart from each other, whose connecting line extends parallel to the movement axis (26), and wherein the adjustment body (42) is coupled to a disrupting profile (24) which when the adjustment body (42) moves can be guided through the two photoelectric barriers (60, 62).

7. The apparatus (2) of claim 6, wherein the linear positioning encoder (80) is designed to scan the movement of the disrupting profile (24).

## Revendications

1. Unité de gouverne pour une maquette d'avion en soufflerie, comportant une gouverne mobile (86) et un dispositif (2) de réglage et d'arrêt de la gouverne mobile (86), présentant :
- au moins une broche (40) montée rotative avec blocage automatique ;
- au moins un corps de réglage (42) relié à une ferrure de gouvernail (22) ;
- au moins un guidage linéaire (18) ;
- au moins une unité d'entraînement (4) ; et
- une unité de commande ;
dans laquelle le corps de réglage (42) est guidé de manière coulissable au moyen du guidage linéaire (18) le long d'un premier axe de déplacement (26) ;
dans laquelle la broche (40) est reliée au corps de réglage (42) pour déplacer le corps de réglage (42) le long de l'axe de déplacement (26) ;
**caractérisé en ce que**
- l'unité d'entraînement (4) est disposée sur le même axe que la broche (40) et reliée directement à celle-ci et
- au moins un capteur de mesure de déplacement linéaire (84) est disposé sur le guidage linéaire (18),
dans laquelle le capteur de mesure de déplacement linéaire (80) et l'unité d'entraînement (4) sont reliés à l'unité de commande (28) et l'unité de commande (28) est agencée de manière à régler une position de réglage prédéfinie du corps de réglage (42) en tournant la broche (40) au moyen de l'unité d'entraînement (4) et en comparant avec la position de réglage prédéfinie une position actuelle du corps de réglage (42) détectée par le capteur de mesure de déplacement linéaire (80).

2. Unité de gouverne selon la revendication 1, dans laquelle le corps de réglage (42) présente un écrou de broche (68) comportant un filetage d'écrou de broche qui correspond à filetage de la broche (40) ainsi qu'un évidement (70) adapté pour recevoir l'écrou de broche (68) par complémentarité de forme lors de l'insertion et sans qu'il puisse tourner.

3. Unité de gouverne selon la revendication 1 ou 2, dans laquelle le corps de réglage (42) présente des moyens de liaison (20) pour être relié à un levier de réglage (74).

4. Unité de gouverne selon une des revendications précédentes, dans laquelle le guidage linéaire (18) est réalisé sous la forme d'un corps avec un évidement (50) symétrique à l'axe de déplacement pour guider le corps de réglage.

5. Unité de gouverne selon une des revendications précédentes, dans laquelle le corps de réglage (42) est couplé à un mécanisme d'arrêt d'extrémité (10, 12) qui est relié à l'unité de commande (28) et agencé pour éviter, lors de la détection d'une position extrême du corps de réglage (42), une direction de déplacement de réglage conduisant à dépasser la position extrême en question en interdisant cette direction de déplacement de réglage.

6. Unité de gouverne selon la revendication 5, présentant deux mécanismes d'arrêt d'extrémité réalisés sous la forme de deux barrières lumineuses (60, 62) distantes l'une de l'autre, dont la ligne de liaison est parallèle à l'axe de déplacement (26) et dans laquelle le corps de réglage (42) est couplé à un profilé d'interruption (24) qui peut être guidé lors du déplacement du corps de réglage (42) à travers les deux barrières lumineuses (60, 62).

7. Unité de gouverne selon la revendication 6, dans laquelle le capteur de mesure de déplacement linéaire (80) est agencé de manière à balayer le déplacement du profilé d'interruption (24).
